# FASCICULE DE BREVET EUROPEEN

(11) **EP 2 430 628 B1**
(45) Date de publication et mention de la délivrance du brevet: **06.07.2016**
(21) Numéro de dépôt: 10721440.5
(22) Date de dépôt: 11.05.2010
(51) Int. Cl.: G09B 23/28

(54) **ENSEMBLE D'APPRENTISSAGE ET SIMULATEUR DE TORSE DE NOURRISSON POUR L'APPRENTISSAGE DU GESTE DE LA KINÉSITHÉRAPIE RESPIRATOIRE**
LERNBAUGRUPPE UND KINDERTORSO-SIMULATOR ZUM ERLERNEN DES AKTS DER ATMUNGSKINESITHERAPIE
LEARNING ASSEMBLY AND INFANT TORSO SIMULATOR FOR LEARNING THE ACT OF RESPIRATORY KINESITHERAPY

(30) Priorité: 13.05.2009 FR 0902308
(43) Date de publication de la demande: 21.03.2012
(73) Titulaire: Université de Savoie, 73000 Chambery (FR)
(72) Inventeur: BARTHOD, Christine, F-74370 Naves Parmelan (FR); MARÉCHAL, Luc, F-74000 Annecy (FR)
(74) Mandataire: Croonenbroek, Thomas Jakob
(86) Numéro de dépôt international: PCT/EP2010/056492
(87) Numéro de publication internationale: WO 2010/130754

(56) Documents cités:
- WO-A1-97/05592
- WO-A2-02/38039
- US-A- 4 360 345
- US-A- 4 611 998
- US-A- 5 468 151
- US-A1- 2008 171 311
- US-B1- 6 874 501

## Description

L'invention est relative à un simulateur de torse de nourrisson pour l'apprentissage de la kinésithérapie respiratoire. L'invention concerne également un ensemble d'apprentissage comportant un tel simulateur.

L'augmentation des affections respiratoires chez le nourrisson, telle que la bronchiolite, est un réel problème de santé publique avec une récurrence chaque hiver d'un afflux massif de patients dans les cabinets de kinésithérapie et aux urgences pédiatriques.

La bronchiolite se manifeste par une infection respiratoire virale qui entraîne une obstruction des voies aériennes par l'inflammation des bronches du nourrisson et leurs extrémités : les bronchioles. Le virus respiratoire syncytial (VRS*) est l'agent pathogène le plus fréquemment impliqué dans l'infection.

L'hypersécrétion de mucus est l'élément dominant de l'obstruction bronchique. Chez les jeunes enfants, les bronches et bronchioles étant étroites, l'inflammation handicape l'écoulement de l'air. Le volume courant du nourrisson étant faible et celui-ci ne possédant pas assez de force pour tousser seul, le petit malade ne peut expectorer entraînant ainsi l'infection de son appareil respiratoire.

A ce jour, il n'existe pas de vaccin susceptible de prévenir les infections dues au VRS.

La prévention de la transmission repose principalement sur le respect des mesures d'hygiène et sur l'isolement des enfants malades. Ces mesures, bien que simples, sont mal connues des parents. De plus, les résultats des études réalisées sur l'efficacité des thérapies médicamenteuses alimentent la controverse sur la prescription systématique de médicaments.

Par conséquent, la prise en charge de la bronchiolite avec des séances de kinésithérapie respiratoire est actuellement la plus répandue.

En 1964, Huault évoque une technique de ventilation, basée sur la synchronisation d'un soufflet de trachéotomie avec une manoeuvre manuelle sur le thorax provoquant une toux artificielle, issue de pratiques de réanimation néonatale en Afrique du Sud. Puis en 1973, en France, Barthe propose chez le petit enfant les prémices d'une des techniques actuelles qu'il nomme « Accélération du Flux Expiratoire (AFE) ».

En France, les séances de kinésithérapie respiratoire sont prescrites par un médecin. En moyenne il suffit de 6 séances pour venir à bout de l'encombrement bronchique. En outre, la kinésithérapie respiratoire, et notamment les techniques d'AFE et d'ELP (Expiration Lente Prolongée), ne se limite pas aux soins apportés à la bronchiolite. Aujourd'hui c'est la technique la plus utilisée en France pour le drainage bronchique dans le traitement de la mucoviscidose.

Les techniques de kinésithérapie respiratoire ont sans cesse évolué depuis leur création ; de nombreux praticiens experts transmettent leur expérience au travers de publications. Fausser et Demont définissent la technique AFE comme « un mouvement thoraco-abdominal synchronisé par les mains du kinésithérapeute au début du temps expiratoire ». Le geste dynamique résultant « aboutit à une compression plus ou moins forte du thorax et de l'abdomen [...] pour créer un flux capable de mobiliser les sécrétions, en évitant le collapsus bronchique, qui le rendrait inefficace ».

La détresse respiratoire du nourrisson atteint de bronchiolite induit une résistance qui empêche le malade de vider seul ses poumons et de respirer normalement. La méthode employée consiste donc à aider la ventilation pour réduire l'obstruction bronchique. La déformation mécanique des poumons produit une augmentation de la pression à l'intérieur des alvéoles. Vinçon et Fausser, ainsi que Postiaux, suggèrent que le gradient de pression entre les alvéoles et la bouche produit une circulation d'air avec un écoulement turbulent. Cet écoulement pourrait mobiliser les sécrétions de mucus et participer à la désobstruction des voies aériennes.

D'après Evenou : « La clé de la mobilisation des sécrétions réside dans le rapport de force que le praticien établit entre le flux et la sécrétion en utilisant deux variables indispensables : l'augmentation des débits pour jouer sur la qualité d'adhérence des sécrétions, l'amplitude expiratoire à différents niveaux du temps expiratoire pour solliciter la sécrétion en fonction de sa localisation ». Delplanque souligne le fait que « l'utilisation du flux expiratoire pour mobiliser les sécrétions bronchiques et aboutir à l'expectoration ne peut pas s'intégrer dans une pratique standardisée. En effet, il existe différents contextes physiologiques [...] et physiopathologiques [...] qui imposent d'adapter cette technique de désencombrement bronchique ». Le praticien doit donc en permanence évaluer l'état des sécrétions et adapter la conduite de son geste en modulant le flux et l'amplitude dynamique expiratoire, tout en prenant en compte le comportement physiologique du nourrisson en interprétant les signes cliniques et respiratoires comme le débit d'air expulsé.

Les kinésithérapeutes sont fortement sollicités sur une période relativement courte, classiquement comprise entre les mois de novembre à février. Le mode de survenue de la maladie ne leur permet pas une pratique des soins spécifiques à la bronchiolite tout au long de l'année et rend l'apprentissage initial tributaire de la période sur laquelle se déroule le stage de pédiatrie.

Dans le cadre de ces traitements en kinésithérapie respiratoire « de ville », les Réseaux Bronchiolite organisent chaque année des stages de formation continue en direction des kinésithérapeutes.

Mais l'absence de moyens de mesures adaptés et didactiques, non contraignants, est ressentie par les praticiens de kinésithérapie, comme une gêne à l'enseignement des gestes nécessaires au désencombrement des voies respiratoires. En effet, les techniques pratiques de kinésithérapie respiratoire du nourrisson et particulièrement les gestes AFE (Augmentation du Flux Expiratoire) et/ou ELP (Expiration Lente Prolongée) s'enseignent, en formation initiale, dans le cadre de stages hospitaliers par compagnonnage. Cette possibilité d'apprentissage est très partiale puisque le praticien en formation apprend en situations de soins, lesquelles ne sont pas des situations didactiques et ne permettent donc pas d'isoler les schémas caractéristiques du geste.

D'autre part, l'apprenant se forme au contact d'un praticien expérimenté qui détient, a priori, les savoirs de la kinésithérapie : les savoirs savants et les savoirs experts. Les savoirs experts sont des savoirs pratiques, réfléchis, analysés puis testés en situation, objets de consensus professionnels qui ne sont pas toujours officialisés par l'ensemble de la communauté scientifique des masso-kinésithérapeutes. Ces savoirs ont été identifiés afin de caractériser le geste effectivement réalisé et de mettre en évidence les paramètres pertinents de son efficacité.

Pour faciliter l'apprentissage de gestes spécifiques médicaux, il existe cependant de nombreux mannequins pédiatriques.

Certains mannequins reproduisent l'anatomie du nourrisson avec des repères anthropomorphes et comportent une représentation globale des poumons.

On connaît par exemple des mannequins pour l'apprentissage du bouche à bouche, présentant un corps comprenant une coque souple enveloppant une mousse interne et une poche d'air disposée sous la coque au niveau du thorax. La poche d'air est reliée à un tube au niveau de la bouche et est munie d'une valve unidirectionnelle représentant le système respiratoire. Les mannequins peuvent basculer la tête avec une subluxation de la mâchoire nécessaire pour l'ouverture des voies respiratoires. Toutefois, les mannequins destinés à l'apprentissage des gestes de secourisme ne peuvent être utilisés pour la pratique de kinésithérapie respiratoire car la compliance du torse est trop éloignée de la réalité pour que le praticien retrouve les mêmes sensations.

D'autres mannequins comportent une série de capteurs permettant la mesure de déplacements du thorax dans une direction privilégiée. Ces mannequins ne sont pas initialement destinés au milieu médical mais à la réalisation de mesures lors de crash-tests automobiles. Ils ne sont donc pas adaptés.

On connaît par exemple un mannequin anthropomorphe représentant un enfant de six mois instrumenté présentant un corps anthropométrique dont la conception a été réalisée en appliquant des facteurs d'échelle sur les caractéristiques biomécaniques de l'adulte par la méthode dite de « scaling ». Cependant, cette méthode utilisée pour obtenir les propriétés biomécaniques du nourrisson est considérée comme peu fiable. En effet, un nourrisson de six mois n'est pas un adulte à taille réduite, le développement du corps n'est évidemment pas encore terminé à cet âge. Ces mannequins développés à partir des données biomécaniques de l'adulte et la méthode de transfert au nourrisson ne sont pas appropriés pour obtenir un résultat réaliste.

On connaît aussi des simulateurs anatomiques instrumentés et automatisés qui permettent une interaction dynamique avec l'utilisateur via la génération de scénarios, et qui simulent des comportements spontanés spécifiques par le moyen d'actionneurs intégrés.

Ces mannequins comportent un thorax composé d'une coque rigide simulant une élévation naturelle de la poitrine représentative de la respiration libre. D'autres mannequins plus sophistiqués permettent la génération des phénomènes respiratoires réalisée par une régulation d'air comprimée. Le déplacement du thorax est assuré par un système d'actionneurs et de ressorts unidirectionnels.

Cependant, le thorax du mannequin est réalisé par une coque rigide actionnée. D'autre part, les compressions ne peuvent, du fait de la conception mécanique, n'être effectuées que selon un seul axe dirigé vers l'intérieur du thorax du mannequin. Cette conception est cependant suffisante pour une utilisation dans le cadre de compressions pour la réalisation de massages cardiaques lors de simulations de réanimation.

Ces simulateurs très perfectionnés et réalistes résultent de nombreuses années de conception. Cependant ils ne sont pas adaptés au geste de kinésithérapie respiratoire car ils ne permettent pas une déformation de leur structure suivant les deux axes du plan sagittal (plan vertical parallèle à un axe antéro-postérieur de la tête et passant par un point situé à mi-distance entre les deux yeux) : le déplacement du torse est unidirectionnel et les coques utilisées pour simuler le gril costal (ensemble des côtes qui forment la cage thoracique) sont rigides. Ils restent destinés au diagnostic et à la prise en charge lors de situations d'urgence en anesthésie réanimation.

Ainsi, les systèmes pédiatriques existants ne possèdent pas un comportement mécanique global du torse autorisant la pratique de kinésithérapie respiratoire. En effet, les systèmes les plus simples comportent une poche d'air pour simuler les poumons. Les plus élaborés intègrent des capteurs et des actionneurs pour représenter un comportement respiratoire libre. Cependant, aucun ne peut apporter une réponse au besoin des kinésithérapeutes.

A ce jour, il n'existe pas de matériel pédagogique dédié à la formation de kinésithérapie respiratoire pour le nourrisson et les simulateurs pédiatriques existants dans le domaine médical ne sont pas adaptés à ces gestes spécifiques. Afin d'avoir une approche didactique des gestes de kinésithérapie respiratoire, il apparaît donc de plus en plus nécessaire, pour la communauté des masso-kinésithérapeutes, de disposer d'un dispositif d'apprentissage permettant : pour le formateur en kinésithérapie d'une part, de quantifier son geste et de contrôler quantitativement le geste de l'apprenant ; pour le praticien en formation d'autre part, d'acquérir les « gestes de base » et de s'entraîner dans un environnement exempt de risque, avant d'exercer ces techniques sur un nourrisson.

La présente invention vise donc à proposer un simulateur de torse de nourrisson pour l'apprentissage du geste en kinésithérapie respiratoire qui résout les inconvénients susmentionnés.

A cet effet, l'invention a pour objet un simulateur de torse de nourrisson pour l'apprentissage du geste de la kinésithérapie respiratoire comportant un corps de torse de nourrisson déformable dans un plan sagittal, caractérisé en ce que ledit corps de torse est réalisé en une seule pièce et en ce qu'une pluralité d'évidements est ménagée dans la partie interne thoracique et abdominale dudit corps de torse, pour faciliter la déformation du corps de torse dans une direction longitudinale, lors de la réalisation d'un geste de kinésithérapie respiratoire.

Le corps de torse peut alors se déformer dans le plan sagittal tout en étant plus facilement déformable selon l'axe longitudinal, reproduisant le comportement bilinéaire du torse d'un nourrisson lors de la réalisation d'un geste de kinésithérapie respiratoire, c'est-à-dire ressenti par les kinésithérapeutes comme «mou au début et se durcissant en fin d'expiration»; «l'impression de résistance augmentant au fur et à mesure de la manoeuvre ». La loi de comportement mécanique global du torse du nourrisson est ainsi respectée. Le ressenti mécanique de déformation du corps de torse est donc très similaire à celui du torse d'un véritable nourrisson pour lequel les os du grill costal ne sont pas encore rigidifiés et dont on cherche à représenter la compression des poumons et de l'abdomen au cours de la pratique de gestes de kinésithérapie respiratoire.

En outre, les avantages de l'utilisation de simulateurs médicaux pour l'apprentissage sont multiples :
- Pour le patient, ils évitent l'inconfort de servir de « cobaye » en ôtant à l'apprenant « le stress de la première fois ». L'innocuité des gestes est ainsi garantie,
- L'accès aux situations simulées est rendue possible toute l'année. Ce point est d'autant plus important lorsque les pathologies considérées sont saisonnières,
- De nombreuses situations cliniques peuvent être simulées et notamment les situations ou pathologies d'occurrence rare qu'un novice ne pourra que très rarement rencontrer lors de stages en milieu hospitalier et qui nécessitent une prise en charge spécifique et délicate,

- Dans le cadre de la formation initiale, ils permettent la prise en charge d'un patient en effectuant des exercices réalistes dans un environnement exempt de risques,
- Au niveau de la pédagogie, l'entraînement sur simulateur permet d'appréhender les situations hors du contexte en évitant l'urgence qui peut paralyser les ressources cognitives. L'étudiant est placé dans un contexte d'apprentissage exclusivement. La formation tutorée facilite le dialogue de l'apprenant avec l'enseignant-encadrant. La reproductibilité des scénarios et la possibilité de verbalisation et d'explication à haute voix du raisonnement et des prises de décisions enrichissent l'apprentissage. Cette situation didactique permet d'isoler des schémas caractéristiques du geste,
- Pour l'entraînement, les gestes peuvent être répétés autant de fois que nécessaire, sans contrainte temporelle, jusqu'à l'obtention de leur efficacité et d'une maîtrise considérée comme parfaite de la technique par les experts,
- A court terme, ces systèmes constituent potentiellement un outil d'évaluation en continu des connaissances des élèves et de validation de l'aptitude à exercer une spécialité, ou d'obtention de diplôme,
- A plus long terme, le champ d'investigation au niveau de pratiques nouvelles pourrait être élargi par l'aide à la réflexion et l'amélioration de techniques professionnelles actuelles,
- Enfin, un rôle d'expertise est envisageable. Aujourd'hui, dans le domaine de la massokinésithérapie, il n'y a pas d'obligation d'évaluation de la pratique professionnelle mais dans l'avenir, des normes, notamment au niveau européen, pourraient être imposées. Ainsi, les sociétés d'assurance regardent avec un grand intérêt ces outils et pourraient les utiliser pour l'évaluation continue des professionnels de santé, ou comme certification en vue d'une autorisation à pratiquer.

Selon une ou plusieurs caractéristiques du simulateur de torse prise seule ou en combinaison,
- le corps de torse est moulé,
- le corps de torse est creux,
- lesdits évidements sont disposés dans la partie frontale du corps de torse,
- la partie thoracique est plus déformable que la partie abdominale dans la direction longitudinale,
- lesdits évidements présentent la forme de rainures transversales contenues dans un plan transverse et sensiblement parallèles entre elles,
- lesdites rainures transversales sont continues,
- le corps de torse comporte au moins deux couches de matériau d'élasticité différente superposées,
- lesdites couches de matériau comprennent un matériau élastomère de silicone comportant une résine et un durcisseur, une première couche de matériau présentant un taux de durcisseurs plus important qu'une deuxième couche de matériau,
- un bloc est disposé à l'intérieur du corps de torse entre une première partie thoracique et une deuxième partie abdominale pour simuler le diaphragme,
- le matériau du corps de torse est un élastomère de silicone avec un module d'Young compris entre 0,3 et 5 MPa,
- ledit corps de torse est configuré pour se déformer pour la partie thoracique :
   entre 6% et 20% dans la direction longitudinale et entre 8% et 14% dans la direction transversale et pour la partie abdominale : entre 1% et 5% dans la direction longitudinale et entre 2% et 15% dans la direction transversale, sous l'action d'efforts de compression appliqués lors de la réalisation d'un geste de kinésithérapie respiratoire,
- le simulateur de torse comporte des capteurs de pression disposés dans une première partie thoracique et dans une deuxième partie abdominale,
- le simulateur de torse comporte un haut parleur pour simuler des sons d'auscultation ou du flux expiratoire,
- le simulateur de torse comporte un système de mesure de déplacement de la partie thoracique et de la partie abdominale,
- le simulateur de torse comporte un système de génération des vibrations au niveau de la partie thoracique,
- le simulateur de torse comporte au moins un actionneur disposé à l'intérieur du corps de torse, ledit actionneur pouvant prendre une position haute en contact avec la partie interne de la partie thoracique et une position basse à l'écart de ladite partie interne, pour simuler une respiration libre et/ou un blocage,
- le simulateur de torse comporte au moins une alarme sonore ou visuelle.

L'invention a aussi pour objet un ensemble d'apprentissage caractérisé en ce qu'il comporte un simulateur de torse tel que décrit précédemment et une paire de gants équipés de capteurs de pression et de capteurs de déplacement.

D'autres avantages et caractéristiques apparaîtront à la lecture de la description de l'invention, ainsi que sur les figures annexées sur lesquelles :
- la figure 1 est une vue schématique en perspective d'un simulateur de torse de nourrisson dont on a également représenté en double des renforts latéraux à l'état désassemblé,
- la figure 2 est une vue partielle d'un corps de torse représenté en deux parties pour faciliter la visualisation, ainsi que des nervures du moule ayant servi à la réalisation dudit corps de torse,
- la figure 3A est une modélisation illustrant les déformations longitudinales maximales du simulateur de torse de la figure 1 obtenues sous l'action d'efforts de compression appliqués par un kinésithérapeute expert référent,
- la figure 3B représente un modèle numérique des déformations transversales maximales du simulateur de torse de la figure 1 obtenues sous l'action d'efforts de compression appliqués par un kinésithérapeute expert référent,
- la figure 3C est un tableau récapitulant les déformations maximales du corps de torse des figures 3A et 3B,
- la figure 4A est une vue schématique en perspective et de devant d'un autre exemple de réalisation d'un corps de torse de nourrisson,
- la figure 4B est une vue en coupe transversale et de dos d'une portion de corps de torse de nourrisson de la figure 4A,
- la figure 4C représente une tranche dans le plan sagittal (X, Z) du corps de torse des figures 4A et 4B,
- la figure 4D est un tableau récapitulant les déformations maximales du corps de torse des figures 4A et 4B,
- la figure 5 représente une paire de gants d'un ensemble d'apprentissage,
- la figure 6A représente une vue en perspective et de face d'un simulateur de torse comportant un actionneur dans une position intermédiaire avec un corps de torse schématisé en transparence,
- la figure 6B représente une vue schématique de côté du simulateur de torse de la figure 6A avec ledit actionneur en position « haute », et
- la figure 6C est une vue analogue à la figure 6B avec ledit actionneur en position « basse ».

Sur ces figures, les éléments identiques portent les mêmes numéros de référence. Dans la suite du texte, les notions de supérieure, inférieure, haut et bas seront utilisées en référence à la station debout d'un nourrisson, et les notions d'intérieur et d'extérieur seront utilisées en référence à l'intérieur ou à l'extérieur d'un torse de nourrisson ou du simulateur de torse. En référence au repère (X, Y, Z) représenté sur les figures, on définit l'axe longitudinal du corps de torse comme l'axe X, l'axe transversal du corps de torse comme l'axe Z, le plan transverse comme le plan (Y, Z) et le plan sagittal comme le plan (X, Z).

On désigne par nourrisson, un enfant âgé de plus d'un mois et de moins de deux ans.

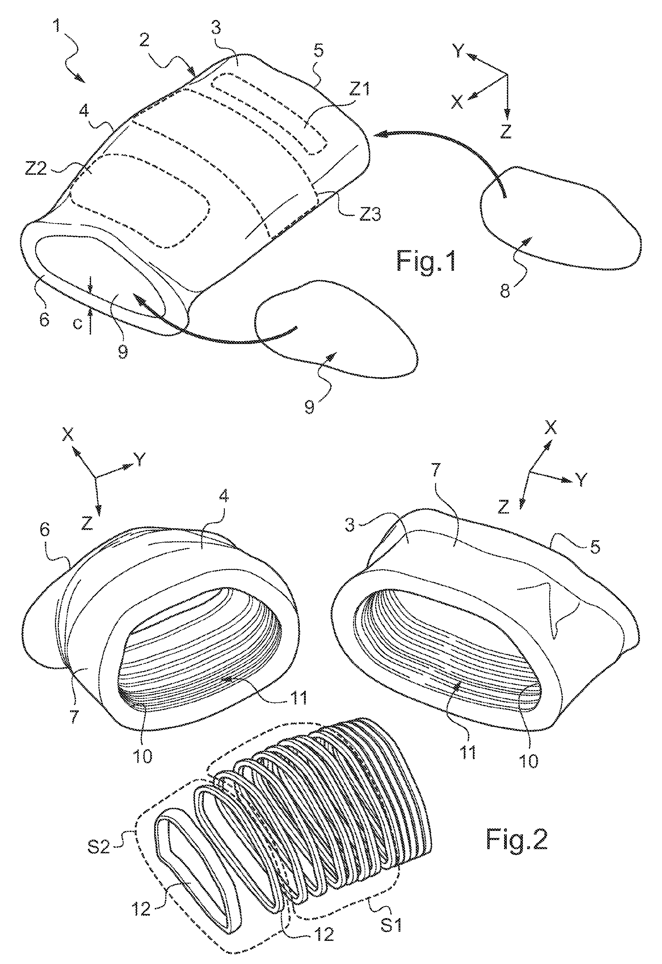

La figure 1 représente un simulateur de torse de nourrisson 1 pour l'apprentissage du geste en kinésithérapie respiratoire. Le simulateur de torse 1 permet de représenter artificiellement le comportement mécanique global d'un torse de nourrisson réel pour la pratique de kinésithérapie respiratoire, telle que les techniques d'AFE ou d'ELP, pour le traitement des maladies entraînant des obstructions respiratoires, comme par exemple pour les soins apportés à la bronchiolite ou pour le drainage bronchique dans le traitement de la mucoviscidose.

Le simulateur de torse 1 comporte un corps de torse 2 présentant une première partie thoracique 3, dans la partie supérieure du corps de torse 2 et une deuxième partie abdominale 4 dans la partie inférieure du corps de torse 2.

Le corps de torse est réalisé en une seule pièce, on prévoit que le corps de torse 2 soit moulé en une seule pièce avec un ou plusieurs matériaux. Le corps de torse 2 moulé permet de reproduire avec une bonne fidélité la forme externe d'un nourrisson. En effet, le moule peut être obtenu par usinage à partir du volume réalisé en CAO, ce qui permet l'obtention d'un anthropomorphisme réaliste.

Le corps de torse 2 est conçu sous la forme d'un mannequin pleine échelle représentant l'aspect extérieur du torse de nourrisson. Dans l'exemple représenté sur les figures, le corps de torse est représentatif d'un nourrisson âgé de six mois.

La structure du corps de torse 2 est par exemple créée à partir de scanners de nourrisson existants pour représenter également le sternum, l'appendice xiphoïde, l'ombilic ainsi que les mamelons. Les dimensions et repères anatomiques du torse du nourrisson sont alors reproduits. Par ailleurs, la fabrication par moulage permet un délai et un coût de fabrication réduits. En outre, il est alors possible d'intégrer des capteurs de pression dans le corps de torse 2 moulé, près de la surface extérieure du corps de torse 2, qui sera en contact avec les mains du kinésithérapeute lors de l'exécution du geste.

Le corps de torse 2 est avantageusement creux, ce qui permet de disposer d'un espace interne embarqué pour placer une instrumentation associée. Le corps de torse 2 possède une première et une deuxième extrémités 5, 6 du corps de torse 2, des clavicules à l'extrémité 5 haute de la première partie thoracique 3 et du bassin à l'extrémité 6 basse de la deuxième partie abdominale 4. Pour améliorer l'esthétique et l'anthropomorphisme du simulateur 1 et afin de faciliter le repérage du kinésithérapeute, on peut ajouter des bras, des jambes et une tête aux extrémités correspondantes du corps de torse 2.

L'épaisseur c du corps de torse 2 est par exemple de l'ordre de 10 à 20 millimètres.

Pour la fabrication, on prévoit par exemple un moule comportant un noyau interne permettant de définir la forme interne et l'épaisseur, et un contre moule externe permettant de réaliser la forme externe du nourrisson.

Dans le cas d'un corps de torse 2 creux, le matériau du corps de torse est par exemple un élastomère de silicone, de type RTV (« Résines Vulcanisables à froid » ou « Room Temperature Vulcanization » en anglais), avec un module d'Young compris entre 0,3 et 5 MPa, par exemple de l'ordre de 1 MPa pour la première partie thoracique 3 et la deuxième partie abdominale 4.

La partie thoracique 3 est plus déformable que la partie abdominale 4 dans la direction longitudinale X. On prévoit alors par exemple un module d'Young de 1 MPa pour la première partie thoracique 3 et un module d'Young supérieur à 1 MPa pour la deuxième partie abdominale 4. On peut prévoir également que le secteur S2 de la partie abdominale 4, à proximité de l'extrémité 6 basse de la deuxième partie abdominale 4 se déforme davantage qu'un premier secteur S1 de la partie abdominale 4, à proximité du diaphragme.

Pour faciliter la réalisation d'un corps de torse 2 avec des matériaux de modules d'élasticité différents dans la première partie thoracique 3 et dans la deuxième partie abdominale 4, on prévoit un moule en deux ou trois parties pouvant s'assembler (non représenté).

On dispose en outre un bloc (non visible sur les figures), par exemple en mousse, à l'intérieur du corps de torse 2, dans une zone centrale Z3 située à cheval entre la première partie thoracique 3 et la deuxième partie abdominale 4, pour simuler le diaphragme humain. Le bloc présente une forme générale adaptée pour suivre la périphérie interne transversale du corps de torse 2.

La position du centre du bloc par rapport à l'extrémité 5 des clavicules est d'environ 56 millimètres, de manière à être localisée à hauteur de ce qui serait identifié chez le véritable nourrisson comme le diaphragme.

Le bloc est plein afin d'avoir une raideur suffisante permettant d'assurer la fonction mécanique de transfert des pressions entre la partie abdominale 4 et la partie thoracique 3.

Le simulateur de torse 1 comporte en outre un premier et un deuxième renforts latéraux 8, 9 respectivement disposés aux extrémités 5, 6 correspondantes du corps de torse 2. Les renforts latéraux 8, 9 peuvent s'assembler au corps de torse 2 ou être directement moulés en une seule pièce avec le corps de torse 2. Les renforts latéraux 8, 9 permettent de simuler la raideur induite par les épaules et les hanches du nourrisson.

Le corps de torse 2 de nourrisson est déformable dans un plan sagittal (X, Z) et la partie interne 10 thoracique et abdominale dudit corps de torse 2 présente une pluralité d'évidements configurés pour faciliter la déformation du corps de torse 2 dans une direction longitudinale X, lors de la réalisation d'un geste de kinésithérapie respiratoire.

Le corps de torse 2 est par exemple configuré pour se déformer globalement sous l'action d'efforts de compression appliqués lors de la réalisation d'un geste de kinésithérapie respiratoire :
- pour la partie thoracique 3 : entre 6% et 20% dans la direction longitudinale X et entre 8% et 14% dans la direction transversale Z, et
- pour la partie abdominale 4 : entre 1% et 5% dans la direction longitudinale X et entre 2% et 15% dans la direction transversale Z.

Par exemple, pour un corps de torse 2 représentatif d'un nourrisson de six mois, les évidements 11 sont configurés pour permettre au corps de torse 2 de se déformer d'une distance comprise entre 5 et 11 millimètres dans la direction longitudinale X, entre 8 et 19 millimètres dans la direction transversale Z pour la partie thoracique 3, et entre 2 et 10 millimètres dans la direction longitudinale X et transversale Z pour la partie abdominale 4.

En outre, les évidements 11 peuvent être disposés uniquement dans la partie frontale du corps de torse 2, c'est-à-dire dans la partie antérieure, à l'avant du corps de torse 2.

Le corps de torse 2 peut alors se déformer dans le plan sagittal (X, Y) tout en étant plus facilement déformable selon l'axe longitudinal X reproduisant le comportement bilinéaire du torse d'un nourrisson lors de la réalisation d'un geste de kinésithérapie respiratoire, c'est-à-dire ressenti par les kinésithérapeutes comme « mou au début et se durcissant en fin d'expiration » ; « l'impression de résistance augmentant au fur et à mesure de la manoeuvre ». La loi de comportement mécanique global du torse du nourrisson est ainsi respectée. Le ressenti mécanique de déformation du corps de torse est donc très similaire à celui du torse d'un véritable nourrisson pour lequel les os du grill costal ne sont pas encore rigidifiés et dont on cherche à représenter la compression des poumons et de l'abdomen au cours de la pratique de gestes de kinésithérapie respiratoire.

Le geste de kinésithérapie respiratoire peut être défini comme un mouvement de compression dans le plan sagittal (X, Z) du corps de torse 2 par les deux mains du kinésithérapeute. Une main est placée sur la partie thoracique 3 dans une zone de placement des mains Z1 sur un axe transversal Z entre la fourchette sternale et la ligne intermamelonnaire (voir figure 1). L'appui est réalisé avec le bord cubital de la main. L'équilibre de la main doit être trouvé pour que la pression appliquée par le kinésithérapeute soit relativement uniforme depuis l'éminence hypothénar jusqu'aux doigts. La seconde main est placée sur la partie abdominale 4, dans une zone de placement des mains Z2, sur la face antérieure de l'abdomen, centrée sur l'ombilic. La seconde main opère en contrepoids un appui global par la préhension de la ceinture abdominale.

Au cours du geste, les trajectoires des mains forment un angle de l'ordre de 90°. Le mouvement peut être seulement thoracique lors de circonstances particulières (nouveau-né prématuré, abdomen douloureux).

Selon un premier mode de réalisation, on modifie la raideur du corps de torse 2 en modifiant seulement la géométrie du corps de torse 2.

Par exemple, et comme mieux visible sur la figure 2, les évidements 11 présentent la forme de rainures transversales contenues dans un plan transverse, parallèle au plan (X, Y) et parallèles entre elles. Dans l'exemple représenté, les rainures sont en outre parallèles aux extrémités 5, 6 du corps de torse 2. Les rainures peuvent être périphériques, c'est-à-dire faisant le tour de la partie interne 11 du corps de torse 2 comme représenté sur la figure 2 ou être seulement partiellement périphériques, ménagées uniquement dans la partie frontale du corps de torse 2 tandis que la partie dorsale présente une épaisseur uniforme.

En outre, on peut prévoir des rainures transversales 11 continues au moins dans la partie frontale. Ainsi, les rainures transversales ne présentent pas de rupture au centre de la partie thoracique, ce qui est représentatif de la rigidité globale d'un torse de nourrisson. En effet, les nourrissons ne présentent pas de rigidité au niveau des côtes, la sensation de résistance provenant des poumons.

Pour la fabrication, on peut prévoit un moulage avec un corps de torse 2 d'épaisseur c constante puis, dans un deuxième temps, on extrait des nervures du corps de torse 2, (non représenté), pour que le corps de torse 2 présente des évidements 11 en forme de rainures transversales. Alternativement, on peut prévoir des nervures 12 sur le noyau interne du moule dès la conception du corps de torse (voir figure 2).

Dans l'exemple représenté sur les figures 1 et 2, la première partie thoracique 3 du corps de torse 2 présente cinq évidements en forme de rainure transversale périphérique, présentant une largeur de 5 millimètres, une profondeur de 7, 5 millimètres et espacés d'une distance de 2,5 millimètres.

La deuxième partie abdominale 4 du corps de torse 2 présente par exemple neuf évidements 11 en forme de rainure transversale périphérique présentant une largeur de 5 millimètres. Sept évidements présentant une profondeur de 5 millimètres sont ménagés dans un premier secteur S1 à proximité d'une première partie thoracique du corps de torse 2 et deux évidements 11 présentant une largeur supérieure à 5 millimètres, sont ménagés dans un deuxième secteur S2 à proximité de l'extrémité 6 de bassin du corps de torse 2. Pour plus de clarté, on a représenté les nervures associées 12 du moule du corps de torse 2 avec les espaces entre les nervures 12 correspondant aux espaces entre deux rainures consécutives du corps de torse 2 sur la figure 2.

On obtient ainsi une structure de type « accordéon » permettant des déplacements plus importants dans la direction longitudinale X sans perdre les propriétés en termes de souplesse dans la direction transversale Z. Au cours du geste de kinésithérapie, dans une première phase, c'est la partie interne 10 qui se déforme principalement avec une première raideur. Puis, dans une deuxième phase, le kinésithérapeute continue son mouvement de compression avec la même intensité tandis que toute la structure du corps de torse 2 se déforme, y compris la partie externe 11. La raideur de corps de torse 2 est alors accentuée.

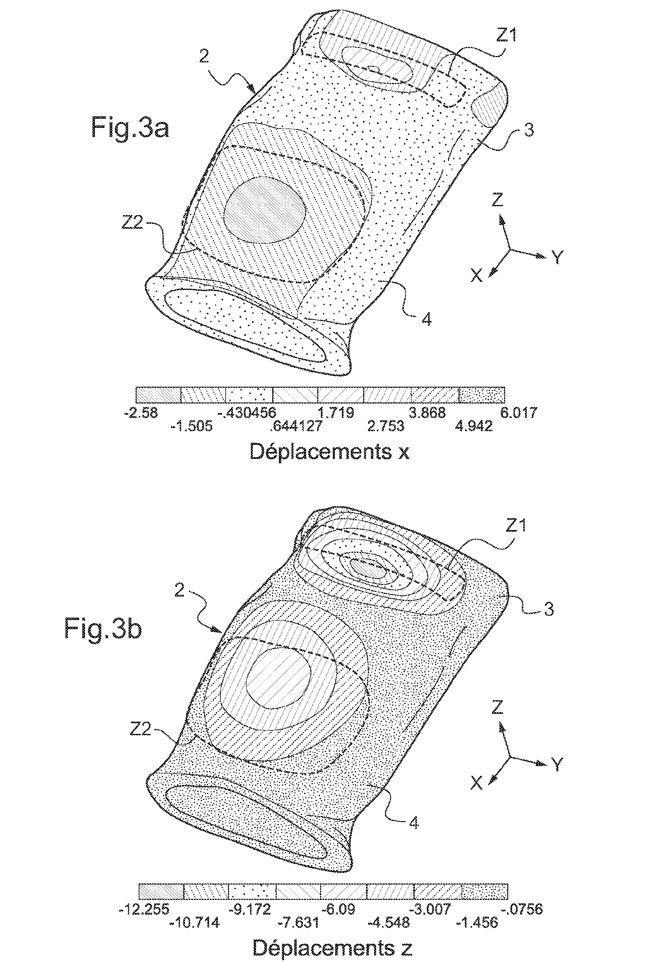

Ces résultats sont schématisés sur les figures 3A et 3B, représentant la modélisation numérique d'un simulateur de torse 1 sous l'action d'efforts appliqués par un kinésithérapeute. Les figures 3A et 3B illustrent respectivement les déformations longitudinales selon l'axe X et transversales selon l'axe Z du simulateur de torse 1.

On distingue sur ces figures, les zones sur lesquelles les déplacements sont les plus importants. Ces zones correspondent aux zones de placement des mains du praticien sur la partie thoracique Z1 et sur la partie abdominale Z2 avec un positionnement adapté avec une charge simulée d'un praticien qui réalise le geste de kinésithérapie respiratoire adapté.

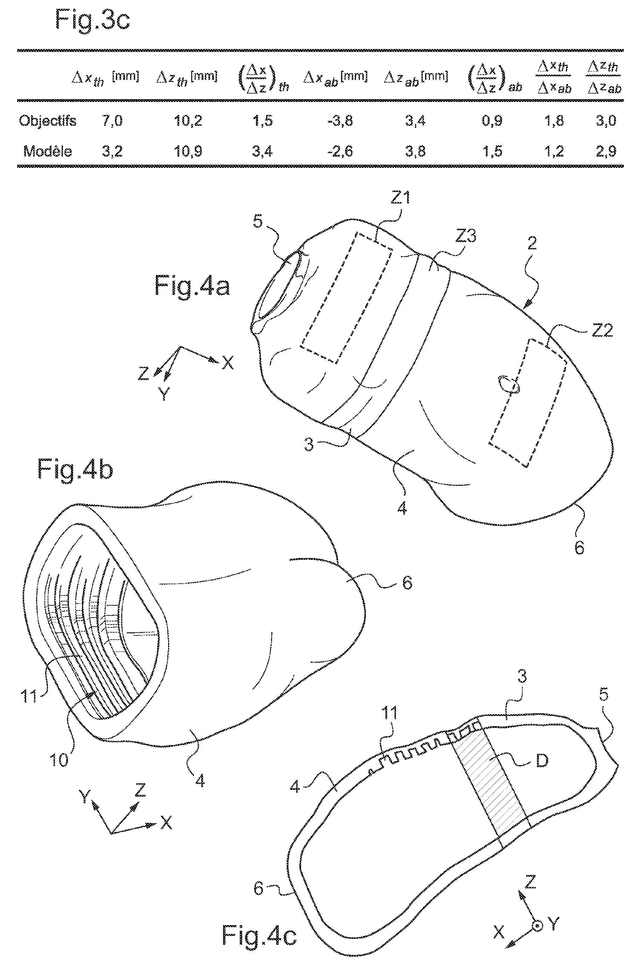

Le tableau de la figure 3C résume les valeurs de déplacements extrêmes en millimètres du corps de torse 2 des figures 3A et 3B (« Modèle ») et des déplacements qui seraient représentatifs d'un torse de nourrisson, obtenu par des mesures réalisées sur une trentaine de nourrissons (« Objectifs »). Le tableau montre que les déplacements obtenus par modélisation sur le simulateur de torse 1 sont très proches de ceux souhaités dans le déplacement dans la direction transversale Z sur la partie thoracique (Zth) et sur la partie abdominale (Zab).

Pour améliorer la correspondance dans le déplacement dans direction longitudinale X sur la partie thoracique (Xth) et sur la partie abdominale (Xab), on peut modifier le nombre d'évidements 11 dans la partie thoracique 3 du corps de torse 2 et réduire leur largeur. On peut également prévoir un matériau dont le module d'élasticité est moins important dans la direction longitudinale.

Selon un autre exemple de réalisation du corps de torse 2 représenté sur les figures 4A et 4B, l'avant de la première partie thoracique 3 du corps de torse 2 présente trois évidements 11 dans la partie frontale du corps de torse 2. Les évidements présentent la forme de rainures transversales semi-périphériques présentant chacun une largeur de 6 millimètres, une profondeur de 6 millimètres, sensiblement parallèles entre eux et espacés les uns des autres d'une distance de 4 millimètres environ.

L'avant de la deuxième partie abdominale 4 du corps de torse 2 présente six évidements 11 dans la partie frontale. Les évidements 11 présentent la forme de rainures transversales semi-périphériques.

Un premier évidement à proximité de la partie thoracique 3, présente une largeur de 3 millimètres et une profondeur de 6 millimètres. Quatre évidements présentant une profondeur et une largeur de 6 millimètres sont ménagés à proximité du premier évidement 11 et un sixième évidement 11 présentant une largeur et une profondeur de l'ordre de 3 millimètres est ménagé à proximité de l'extrémité 6 de bassin du corps de torse 2.

Pour plus de clarté, on a représenté une tranche du corps de torse 2 dans le plan sagittal X, Y représentant les évidements 11 sur la figure 4C. On distingue également sur cette figure, une partie du bloc D simulant le diaphragme humain.

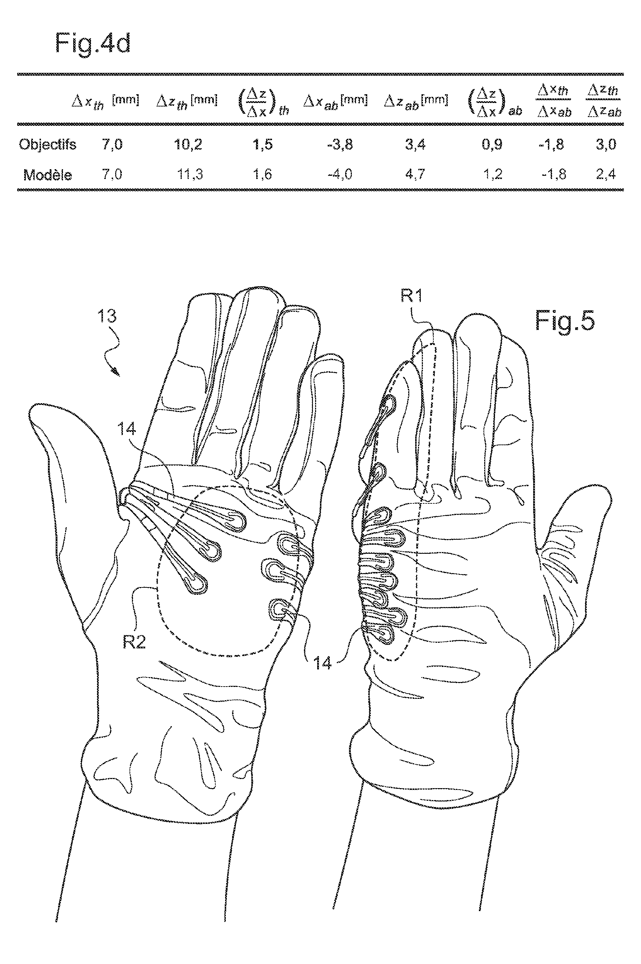

Le tableau de la figure 4D résume les valeurs de déplacements extrêmes en millimètres du corps de torse 2 des figures 4A, 4B et 4C (« Modèle ») et des déplacements qui seraient représentatifs d'un torse de nourrisson, obtenu par des mesures réalisées sur une trentaine de nourrissons (« Objectifs »).

En outre, dans ce deuxième exemple de réalisation, le corps de torse 2 est moulé en une seule pièce incluant le cou, les épaules, les hanches et les fesses du nourrisson.

Selon un deuxième mode de réalisation non représenté, on modifie la raideur du corps de torse 2 en modifiant la géométrie et les caractéristiques mécaniques du matériau corps de torse 2.

Par exemple, le simulateur de torse comporte au moins deux couches de matériau d'élasticité différente superposées. La couche de matériau présentant l'élasticité la plus importante, c'est-à-dire possédant un module d'Young moins important, est par exemple disposée à l'extérieur du corps de torse.

Les couches de matériau comprennent par exemple un matériau élastomère de silicone comportant une résine et un durcisseur. Par exemple, la couche de matériau disposée à l'intérieur du corps de torse présente un taux de durcisseurs plus important que la couche de matériau disposée à l'extérieur du corps de torse.

Pour la fabrication, on prévoit par exemple un contre moule externe et des noyaux internes différents pour un moulage successif des différentes couches superposées.

Dans les deux modes de réalisation envisagés, on peut prévoir que le simulateur de torse 1 comporte des capteurs de pression (non visibles) disposés dans la première partie thoracique 3 et dans la deuxième partie abdominale 4, au niveau des zones de placement des mains Z1, Z2. Les capteurs sont par exemple moulés dans le corps de torse 2. Alternativement, les capteurs sont collés à la surface du corps de torse 2 qui est lui-même recouvert par une couche superficielle de protection (non représenté).

Des capteurs de pression supplémentaires pourront être placés à la périphérie de ces zones Z1, Z2 pour détecter le mauvais placement des mains. On pourra alors vérifier que la pression appliquée sur les zones de placement des mains Z1, Z2 n'est pas totalement nulle avant chaque geste de kinésithérapie respiratoire. En cas de mauvais placement ou de décollement, un signal d'alarme peut être généré.

Le simulateur de torse 1 peut également comporter un capteur de localisation, tel qu'un capteur de pression ou un détecteur de présence comme par exemple un capteur capacitif ou un capteur à effet Hall, dans la partie thoracique 3, au niveau du bas de la trachée, pour permettre de vérifier le placement correct du pouce du kinésithérapeute et vérifier ainsi qu'il est apte à détecter le point de toux provoqué.

On prévoit en outre un ensemble d'apprentissage comportant un simulateur de torse 1 tel que décrit précédemment comportant en outre une paire de gants 13 équipés de capteurs de pression 14 (figure 5) et de capteurs de déplacement (non visibles).

Les capteurs de déplacement comportent par exemple un magnétomètre à six degrés de liberté pour déterminer les positions relatives linéiques et angulaires en fonction du temps. Pour ne pas gêner les mouvements du kinésithérapeute, un capteur de déplacement peut être placé sur le dos de chaque gant, au centre.

Les capteurs de pression 14 sont par exemple des films polymères piézorésistifs, de type FSR (« Force sensing Resistor » en anglais). Les capteurs de pression de type FSR sont des capteurs de force à résistance variable comportant un film de polymère piézorésistif dont la résistance ohmique intrinsèque décroît avec une augmentation de la force normale appliquée sur sa surface active.

Les capteurs de pression 14 sont par exemple collés à la surface des gants 13 dans les régions de contact R1, R2, respectivement de la main thoracique sur la partie thoracique 3 et de la main abdominale sur la partie abdominale 4.

On dispose par exemple neuf capteurs de pression 14 sur la partie cubitale du gant destiné à la « main thoracique » et six capteurs de pression 14 uniformément répartis sur la paume du gant destiné à la « main abdominale ».

Sur les gants 13 et/ou dans le corps de torse 2, ces capteurs 14 permettent d'obtenir en temps réel l'intensité des pressions exercées sur le corps de torse 2, tout en restant invisibles afin de ne pas guider l'apprenant. L'ensemble d'apprentissage et/ou le simulateur de torse 1 peuvent ainsi détecter si la main thoracique et la main abdominale sont correctement positionnées. De même lorsqu'une succession de compressions est en cours, ils peuvent détecter s'il n'y a pas de décollement des mains avec le corps de torse 2 entre deux compressions.

En outre, la mesure de l'amplitude des pressions exercées par le praticien sur les zones de placement Z1, Z2, permet de connaître la dynamique du geste et en particulier les forces exercées. La valeur de l'amplitude maximale des pressions doit être comparée en temps réel avec la valeur obtenue lors d'une précontrainte pour juger de l'innocuité du geste. Le test de précontrainte est réalisé par le praticien en début de séance, pour apprécier les réactions du nourrisson aux contraintes appliquées lors de sa réalisation. Le praticien peut alors évaluer les limites du nourrisson en termes de déplacement juste avant que le collapsus apparaisse. Lors des compressions suivantes, le praticien ne devra pas les dépasser mais s'approcher le plus proche possible de ces limites pour ne pas réaliser un geste dangereux. Si le geste est effectué en dehors des limites, une alarme peut avertir le praticien.

Une autre phase peut consister à mesurer les gestes des kinésithérapeutes experts sur le simulateur pour définir l'ensemble des limites de référence qui seront comparées avec les gestes des novices. Les gestes des kinésithérapeutes peuvent ainsi être comparés à partir d'un même objet d'étude, c'est-à-dire un simulateur de torse de nourrisson ayant le même comportement vis-à-vis de tous les praticiens.

La mesure de l'amplitude des pressions au niveau des zones d'appui des mains permet également d'évaluer la qualité du geste réalisé en particulier sur l'équilibre des mains. Si la préhension du corps de torse 2 n'est pas correctement respectée, un avertissement pourra être généré.

Ainsi, les capteurs de pression 14 permettent de mesurer :
- les amplitudes des pressions appliquées sur le corps de torse 2 par les deux mains du praticien pour connaître l'équilibre, le décollement éventuel des mains, l'adaptation du geste au son du flux expiratoire et les intensités maximales,
- les paramètres temporels, tels que le temps de montée lors de la mise en pression, la durée du relâchement de pression, l'intervalle temporel entre la fin du relâchement d'une compression d'un geste de kinésithérapie respiratoire et le début de la montée en pression du geste suivant, calculés à partir de la mesure des intensités des pressions. Ces paramètres sont également importants à surveiller car la fréquence de réalisation du geste influe sur la fatigue du nourrisson et la dangerosité de l'action. Par ailleurs, le flux respiratoire obtenu est lié, en particulier à la vitesse d'exécution du geste.

Le simulateur de torse 1 peut également comporter un système de mesure de déplacement de la partie thoracique 3 et de la partie abdominale 4 (non représenté). On prévoit par exemple des accéléromètres ou des capteurs de positions tridimensionnels, par exemple, moulés dans le corps de torse 2.

Le simulateur de torse 1 est alors apte à mesurer les amplitudes des déplacements des parties thoracique 3 et abdominale 4 dans la direction longitudinale X et transversale Z, et les directions des trajectoires des mains. Si les critères ne sont pas validés au niveau de la direction des trajectoires, une alarme sonore ou visuelle peut être générée.

Le simulateur de torse 1 peut également comporter un système de génération des vibrations au niveau de la partie thoracique 3 (non représenté).

Ainsi, lorsque les principaux critères de mobilisation des sécrétions et de bonne exécution du geste sont validés après un nombre déterminé de gestes de kinésithérapie respiratoire, par exemple par les mesures des amplitudes des déplacements thoracique et abdominale et par les mesures de pression, le système de génération de vibrations génère de légères vibrations dans la zone de placement de la main Z1 de la partie thoracique 3, simulant la mobilisation des sécrétions dans l'arbre bronchique.

Le simulateur de torse 1 peut également comporter un haut parleur pour simuler des sons d'auscultation, du flux expiratoire ou de toux (non représenté).

A l'auscultation du début de séance, les bruits caractéristiques de l'affection respiratoire renseignent sur la localisation des sécrétions et orientent le type de geste à effectuer.

Les bruits sont d'intensités et de fréquences différentes en fonction du diamètre des voies aériennes. Le haut-parleur est alors configuré pour générer différentes plages sonores correspondant aux différents types d'encombrement bronchique.

Ces sons pourront donc être produits comme entraînement au diagnostic en début de séance avant que le novice ne commence les manoeuvres de kinésithérapie respiratoire. Le son peut également former un critère auditif d'efficacité du geste permettant de guider le praticien pour la dynamique de son geste et d'apprécier sa pratique en parallèle des mesures de pressions appliquées.

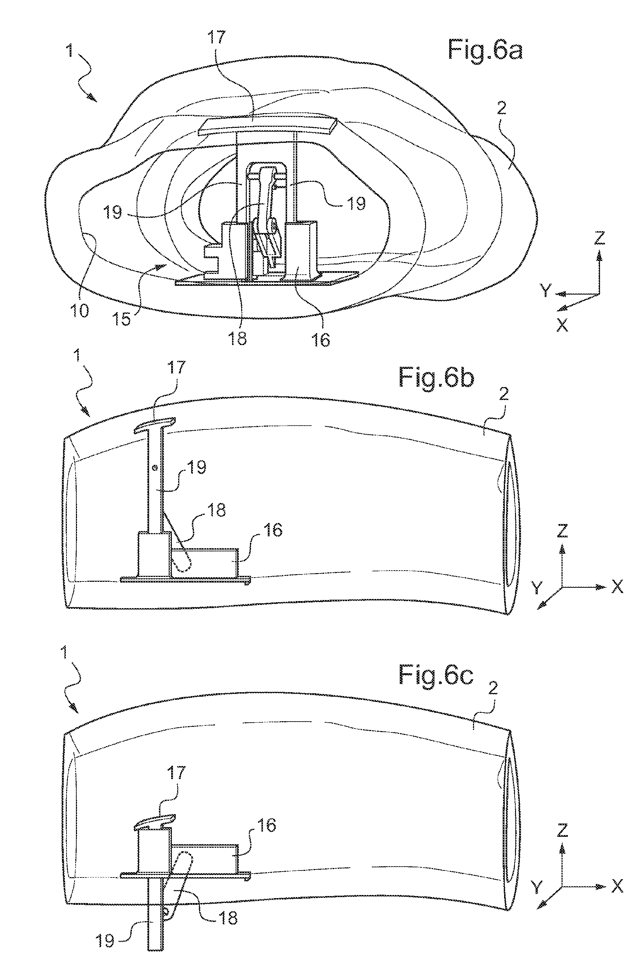

Le simulateur peut également comporter au moins un actionneur 15 disposé à l'intérieur du corps de torse 2, pour simuler une respiration libre et/ou un blocage. Un exemple de réalisation est représenté sur les figures 6A, 6B et 6C.

On choisit plutôt un actionneur mécanique à un vérin électrique pour son faible encombrement ou à un système pneumatique qui nécessite une alimentation en air comprimé. L'actionneur 15 est par exemple un système mécanique de type bielle-piston.

L'actionneur 15 comporte un servomoteur (non représenté) disposé sur un support 16, fixé à la partie interne 10 dorsale du corps de torse 2. Le moteur actionne une plaque thoracique 17 de l'actionneur 15 via un système de bielles 18. La plaque thoracique 17 comporte par exemple des bras de guidage 19, aptes à coulisser dans le support 16 et traverser le corps de torse 2 dans sa partie dorsale.

Dans une position « haute », visible sur la figure 6B, les bielles 18 actionnées par le servomoteur lèvent la plaque thoracique 17 qui entre en contact avec la partie interne 10 supérieure (ou frontale) de la partie thoracique 3 du corps de torse 2. Le corps de torse 2 peut alors être maintenu en position bloquée, non déformé.

Dans une position « basse », visible sur la figure 6C, les bielles 18 actionnées par le servomoteur tirent la plaque thoracique 17 vers l'intérieur du corps de torse 2, libérant la partie interne 10 thoracique. Les bras de guidage 19 traversent alors le corps de torse 2 de sorte que la plaque thoracique 17 soit suffisamment éloignée de la partie interne 10 du corps de torse 2 pour ne pas gêner le geste du kinésithérapeute.

Lorsque l'actionneur 15 est en position haute, la rotation du servomoteur à une fréquence de rotation choisie permet alors de simuler la respiration libre du nourrisson.

L'actionneur 15 de respiration libre est utilisé avant la réalisation du geste de kinésithérapie respiratoire. Il permet que le corps de torse 2 se déplace verticalement pour simuler la respiration du nourrisson de manière à permettre au kinésithérapeute de synchroniser son geste avec la respiration du nourrisson. Au moment du geste, l'actionneur est inactif et n'est pas ressenti par le kinésithérapeute car c'est le mouvement induit par le geste du praticien qui réalise les mouvements d'air dans le nourrisson. La respiration libre du nourrisson simulé par l'actionneur 15 n'est donc qu'un repère visuel. L'utilisateur du simulateur de torse 1 ne doit rien sentir sous sa main lorsqu'il effectue un geste présentant les caractéristiques d'un geste non dangereux.

L'actionneur 15 de blocage du geste agit comme une butée mécanique unidirectionnelle et permet de simuler le comportement du nourrisson en cas de collapsus bronchique face à un geste mal réalisé. Par exemple, l'actionneur 15 actionne la plaque thoracique 17 en position de blocage si la dynamique du geste est trop élevée, si la pression exercée par la main thoracique est trop importante, si le déplacement de la main thoracique suivant l'axe transversal Z est trop important ou si le geste est effectué alors que plus aucun son de flux d'air expiré n'est audible à la bouche du nourrisson. L'actionneur 15 bloque alors le corps de torse 2 de sorte qu'il empêche le kinésithérapeute de réaliser le geste de kinésithérapie respiratoire. De même, si le geste est correctement réalisé, l'actionneur 15 est inactif et n'est pas ressenti par le kinésithérapeute. Sur tous les critères, des scores pourront être calculés en fonction de la comparaison du geste effectué avec le geste expert.

Le simulateur de torse 1 et l'ensemble d'apprentissage permettent ainsi la conception d'un simulateur physique de torse de nourrisson présentant des repères anatomiques et un comportement biomécanique adapté à l'apprentissage du geste de kinésithérapie respiratoire. En outre, le simulateur de torse 1 permet de disposer d'un système de mesure intégré pour caractériser qualitativement et quantitativement les paramètres pertinents du geste effectué afin de définir un geste de référence ainsi que ses limites.

## Revendications

1. Simulateur de torse de nourrisson pour l'apprentissage du geste de la kinésithérapie respiratoire comportant un corps de torse de nourrisson (2) déformable dans un plan sagittal (X, Z), **caractérisé en ce que** ledit corps de torse (2) est moulé en une seule pièce avec des matériaux de modules d'élasticité différents dans une première partie thoracique (3) et dans une deuxième partie abdominale (4), **en ce que** la partie thoracique (3) est plus déformable que la partie abdominale (4) dans la direction longitudinale (X) et **en ce qu'**une pluralité d'évidements (11) est ménagée dans la partie interne (10) thoracique et abdominale dudit corps de torse (2), pour faciliter la déformation du corps de torse (2) dans une direction longitudinale (X), lors de la réalisation d'un geste de kinésithérapie respiratoire.

2. Simulateur de torse selon la revendication 1, **caractérisé en ce que** lesdits évidements (11) présentent la forme de rainures transversales contenues dans un plan transverse (Y, Z) et sensiblement parallèles entre elles.

3. Simulateur de torse selon la revendication 2, **caractérisé en ce que** lesdites rainures transversales sont continues.

4. Simulateur de torse selon l'une des revendications 1 à 3, **caractérisé en ce que** lesdits évidements (11) sont disposés dans une partie frontale du corps de torse (2).

5. Simulateur de torse selon l'une des revendications 1 à 4, **caractérisé en ce que** le corps de torse (2) est creux.

6. Simulateur de torse selon l'une des revendications précédentes, **caractérisé en ce que** ledit corps de torse (2) est configuré pour se déformer sous l'action d'efforts de compression appliqués lors de la réalisation d'un geste de kinésithérapie respiratoire :
- pour la partie thoracique (3) : entre 6% et 20% dans la direction longitudinale (X) et entre 8% et 14% dans la direction transversale (Z), et
- pour la partie abdominale (4), entre 1% et 5% dans la direction longitudinale (X) et entre 2% et 15% dans la direction transversale (Z).

7. Simulateur de torse selon l'une des revendications précédentes, **caractérisé en ce qu'**un bloc est disposé à l'intérieur du corps de torse (2) entre la première partie thoracique (3) et la deuxième partie abdominale (4) pour simuler le diaphragme.

8. Simulateur de torse selon l'une des revendications précédentes, **caractérisé en ce qu'**il comporte des capteurs de pression (14) disposés dans une première partie thoracique (3) et dans une deuxième partie abdominale (4).

9. Simulateur de torse selon l'une des revendications précédentes, **caractérisé en ce qu'**il comporte un système de mesure de déplacement de la partie thoracique (3) et de la partie abdominale (4).

10. Simulateur de torse selon la revendication 5, **caractérisé en ce qu'**il comporte au moins un actionneur (15) disposé à l'intérieur du corps de torse (2), ledit actionneur (15) pouvant prendre une position haute en contact avec la partie interne (10) de la partie thoracique (3) et une position basse à l'écart de ladite partie interne (10), pour simuler une respiration libre et/ou un blocage.

11. Ensemble d'apprentissage **caractérisé en ce qu'**il comporte un simulateur de torse selon l'une des revendications précédentes et une paire de gants (13) équipés de capteurs de pression (14) et de capteurs de déplacement.

## Patentansprüche

1. Kindertorso-Simulator zum Erlernen des Akts der Atmungskinesitherapie, der einen Kindertorsokörper (2) umfasst, der in einer sagittalen Ebene (X, Z) verformbar ist, **dadurch gekennzeichnet, dass** der Torsokörper (2) aus einem einzigen Stück mit Werkstoffen mit unterschiedlichem Dehnungsmodul in einem ersten Thoraxteil (3) und in einem zweiten Bauchteil (4) geformt ist, und dass der Thoraxteil (3) in die Längsrichtung (X) verformbarer ist als der Bauchteil (4), und dass eine Mehrzahl von Ausnehmungen (11) in dem Thoraxinnenteil (10) und Bauchteil des Torsokörpers (2) eingerichtet ist, um das Verformen des Torsokörpers (2) in eine Längsrichtung (X) beim Ausführen eines Atmungskinesitherapie-Akts zu erleichtern.

2. Torsosimulator nach Anspruch 1, **dadurch gekennzeichnet, dass** die Ausnehmungen (11) die Form von Quernuten, die in einer Querebene (Y, Z) enthalten sind, aufweisen und zueinander im Wesentlichen parallel sind.

3. Torsosimulator nach Anspruch 2, **dadurch gekennzeichnet, dass** die Quernuten kontinuierlich sind.

4. Torsosimulator nach einem der Ansprüche 1 bis 3, **dadurch gekennzeichnet, dass** die Ausnehmungen (11) in einem frontalen Teil des Torsokörpers (2) angeordnet sind.

5. Torsosimulator nach einem der Ansprüche 1 bis 4, **dadurch gekennzeichnet, dass** der Torsokörper (2) hohl ist.

6. Torsosimulator nach einem der vorhergehenden Ansprüche, **dadurch gekennzeichnet, dass** der Torsokörper (2) ausgelegt ist, um sich unter der Einwirkung von Kompressionskräften, die beim Ausführen eines Atmungskinesitherapie-Akts angelegt werden, zu verformen:
- für den Thoraxteil (3): zwischen 6 % und 20 % in die Längsrichtung (X) und zwischen 8 % und 14 % in die Querrichtung (Z), und
- für den Bauchteil (4) zwischen 1 % und 5 % in die Längsrichtung (X) und zwischen 2 % und 15 % in die Querrichtung (Z).

7. Torsosimulator nach einem der vorhergehenden Ansprüche, **dadurch gekennzeichnet, dass** im Inneren des Torsokörpers (2) zwischen dem ersten Thoraxteil (3) und dem zweiten Bauchteil (4) ein Block angeordnet ist, um das Zwerchfell zu simulieren.

8. Torsosimulator nach einem der vorhergehenden Ansprüche, **dadurch gekennzeichnet, dass** er Drucksensoren (14) umfasst, die in einem ersten Thoraxteil (3) und in einem zweiten Bauchteil (4) angeordnet sind.

9. Torsosimulator nach einem der vorhergehenden Ansprüche, **dadurch gekennzeichnet, dass** er ein Bewegungsmesssystem des Thoraxteils (3) und des Bauchteils (4) umfasst.

10. Torsosimulator nach Anspruch 5, **dadurch gekennzeichnet, dass** er mindestens einen Stellantrieb (15) umfasst, der im Inneren des Torsokörpers (2) angeordnet ist, wobei der Stellantrieb (15) eine Hochstellung in Berührung mit dem Innenteil (10) des Thoraxteils (3) und eine Tiefstellung abseits des Innenteils (10) einnehmen kann, um eine freie Atmung und/oder eine Blockierung zu simulieren.

11. Lernbaugruppe, **dadurch gekennzeichnet, dass** sie einen Torsosimulator nach einem der vorhergehenden Ansprüche und ein Paar Handschuhe (13), das mit Drucksensoren (14) und Bewegungssensoren ausgestattet ist, umfasst.

## Claims

1. Infant torso simulator for learning the act of respiratory kinesitherapy, comprising an infant torso body (2) that is deformable in a sagittal plane (X, Z), **characterized in that** said torso body (2) is moulded in one piece using materials with different moduli of elasticity in a first, thoracic part (3) and in a second, abdominal part (4), **in that** the thoracic part (3) is more deformable than the abdominal part (4) in the longitudinal direction (X), and **in that** a plurality of recesses (11) are formed in the thoracic and abdominal inner part (10) of said torso body (2), in order to facilitate the deformation of the torso body (2) in a longitudinal direction (X) during the performance of an act of respiratory kinesitherapy.

2. Torso simulator according to Claim 1, **characterized in that** said recesses (11) are in the form of transverse grooves that are contained in a transverse plane (Y, Z) and that are substantially parallel to each other.

3. Torso simulator according to Claim 2, **characterized in that** said transverse grooves are continuous.

4. Torso simulator according to one of Claims 1 to 3, **characterized in that** said recesses (11) are arranged in a front part of the torso body (2).

5. Torso simulator according to one of Claims 1 to 4, **characterized in that** the torso body (2) is hollow.

6. Torso simulator according to one of the preceding claims, **characterized in that** said torso body (2) is designed to deform under the action of compression forces that are applied during the performance of an act of respiratory kinesitherapy:
- for the thoracic part (3): between 6% and 20% in the longitudinal direction (X) and between 8% and 14% in the transverse direction (Z), and
- for the abdominal part (4): between 1% and 5% in the longitudinal direction (X) and between 2% and 15% in the transverse direction (Z).

7. Torso simulator according to one of the preceding claims, **characterized in that** a block is arranged inside the torso body (2) between the first, thoracic part (3) and the second, abdominal part (4) in order to simulate the diaphragm.

8. Torso simulator according to one of the preceding claims, **characterized in that** it comprises pressure sensors (14) arranged in a first, thoracic part (3) and in a second, abdominal part (4).

9. Torso simulator according to one of the preceding claims, **characterized in that** it comprises a system for measuring movement of the thoracic part (3) and of the abdominal part (4).

10. Torso simulator according to Claim 5, **characterized in that** it comprises at least one actuator (15) arranged inside the torso body (2), said actuator (15) being able to adopt a top position in contact with the inner part (10) of the thoracic part (3) and a bottom position away from said inner part (10), in order to simulate free respiration and/or a blockage.

11. Learning assembly, **characterized in that** it comprises a torso simulator according to one of the preceding claims and a pair of gloves (13) provided with pressure sensors (14) and motion sensors.
